# EUROPEAN PATENT SPECIFICATION

(11) **EP 0 770 330 B1**
(45) Date of publication and mention of the grant of the patent: **27.06.2001**
(21) Application number: 96202887.4
(22) Date of filing: 17.10.1996
(51) Int. Cl.: A21C 3/06

(54) **Method and device for rolling a planar piece of material**
Verfahren und Vorrichtung zum Aufwickeln von flacher Teigstücken
Appareil et procédé pour rouler les morceaux de plats de pâte

(30) Priority: 23.10.1995 EP 95202864
(43) Date of publication of application: 02.05.1997
(73) Proprietor: UNILEVER N.V., 3000 DK Rotterdam (NL); UNILEVER PLC, London EC4P 4BQ (GB)
(72) Inventor: Van der Zon, Petrus W. M., Deceased (NL)
(74) Representative: van Westenbrugge, Andries

(56) References cited:
- EP-A- 0 204 490
- EP-A- 0 213 088
- EP-A- 0 238 682
- EP-A- 0 454 202
- DE-A- 4 402 346
- DE-C- 520 213
- GB-A- 218 395
- GB-A- 1 541 457

## Description

The subject invention relates to a method according to the preamble of claim 1.

Such a method is used for example for rolling of substantially flat pieces of flexible material to rolls of dough sheets to obtain 'croissants' with or without filling.

To mechanize such rolling of flat pieces of dough it is proposed in the prior art to place a flat piece of dough on a conveyor belt. Near the discharge end of the conveyor belt a set of rollers is provided rotating such that the flat piece of dough is rolled. This system is also known as the 'Fritsch'-system (DE-4 44 023 46 A1).

A set of two or three rollers having a fixed position and distance during rolling is used transferring the flat piece of dough to a roll of dough sheet. The rotational speed of the rollers is chosen such that in cooperation with the speed of advancement of the conveyor the product is rolled in an appropriate way. The flat piece of dough is trapped between three rollers or between two rollers and the conveyor end roller and in case of two rollers between two rollers and the conveyor end during conversion to a rolled article. The rollers are positioned on a common frame which can be tilted with regard to the conveyor to receive the flat pieces to be rolled in untilted position and discharge the product rolled by tiling on the further discharge conveyor, such as a lower discharge belt.

This means that the tilting movement is only realized at the end of the rolling movement and not during rolling.

Although the need for mechanizing of the rolling movement has long been felt this device has not become a success. The time needed for a complete rolling and discharge cycle is long resulting in a low production capacity. The quality of the product rolled is not acceptable because often folds are observed resulting in a considerable reject percentage.

From the GB-A-1,541,457 a device is known wherein a slab of material is substantially vertically fed in a space which is defined in lateral and downward direction by four rotatable rollers. The lowest of said rollers can move relative to the other ones to provide both an increased volume for the growing rolled article as well as a discharge to remove the finished article. Because of the vertical feed position it is not possible to introduce slabs of material having a filling provided thereon, for example rolls of dough-sheet having a filling. Because of the position of the movable roller guidance of the article to be rolled is relatively limited. For example, there is no controll of the rolling movement what so ever in vertical direction. In this device the spacing between the second and third turning means is fixed. limited. DE 4402346 discloses a frame to which an assembly comprising several turning means is tiltably connected. The relative position between the turning means is fixed. EP 0238682 A1 discloses a structure wherein the second and third turning means are rotatably journalled in a common arm and have a fixed relative position. Because of that the throughput of these devices is limited.

Because of that the invention aims to provide a method not having the drawbacks indicated above wherein it is possible to obtain rolled products from e.g. dough-like material not having any folds and which can be effected with a relatively high speed.

This is realized with a method as described above having the characteristic features of claim 1.

It should be noted that the relative movement of the first turning means with regard to the second and third turning means is meant to comprise both a situation in which first turning means is movable with regard to the framework in which it is provided and the situation wherein the second and third turning means are movable with regard to such frames and/or any combination thereof.

The invention is based on the idea that increase of the diameter of the rolled product during rolling is not only compensated for by having the (first) turning means movable with regard to the other turning means but that those other turning means also move in a direction of feed of the article so that increase of the volume of the article introduced is compensated for in more than one direction. Because of that guidance of the article to be rolled can be effected in more than one direction so that a more controlled movement of the slab of material is effected.

In this way the piece of material is trapped in the space between the three turning means for optimum guidance whilst at the same time this space grows during rolling of the piece of material.

Therefore it is possible to increase the speed of rolling whilst during tests it revealed that no folds or other faults in the finished product were observed. Furthermore it is possible to increase the speed of subsequent rollers resulting in a stretching action as an extra measurement in preventing folds and improving the quality of rolling. By controlling both the position or distance of the rollers and their speed the tightness of rolling can be chosen.

Except from the second turning means also the third turning means moves in a direction having a main component corresponding substantially with the feeding direction of the slab of material.

The method described above can advantageously be used in a method wherein the feed direction of the slab of material is substantially horizontal i.e. ± 45° with regard to the horizontal axis and more particular ± 30° with regard to the horizontal axis.

The first turning means can comprise lifting means for lifting the leading end of the planar piece of material for contact with the second turning means. This lifting means can comprise all means known in the art so as mechanical means or local air jets. However, if the feeding is effected by a conveyor belt or other planar feeding means preferably the lifting means comprise a roller being provided near the discharge end of the feeding means and rotating in the same direction as the end roller of the conveyor.

This lifting roller is preferably moved with regard to both the discharge end and the turning means during rolling of the article. This lifting roller can act as conveyor means during rolling of the article.

According to a preferred further embodiment at least the second and third turning means comprise rollers wherein the distance between the axes of rotation of these rollers can either be fixed or change during rolling, i.e. the distance between those axes increases during rolling.

Furthermore these axes preferably realize a further movement to obtain continuous processing of subsequent planar pieces of material. For example the axes can move according to a circle.

With the method according to the invention it is possible to incorporate a filling, such as a rod-like piece of material or a soft filling, such as jam, on the planar piece of material before this is rolled. However, it is also possible to effect rolling in such a way that a hole is realized in the centre of the rolled article.

The invention also relates to a device according to claim 9.

It should be noted that the conveyor means can be used to feed the planar piece of material to the point of rolling, but its end roller can also act as one of the turning means.

Preferably at least two turning means are provided on arms and comprise rollers. These arms can be arranged both fixed or movably with regard to each other. According to a further embodiment preferably at least two turning means are provided on arms and comprise rollers. These arms can be arranged movably with regard to each other. According to a preferred embodiment the arms are pivotally connected to each other and arranged to realize a circular motion around the pivot point.

Although it is possible to use any number of turning rollers being larger than two, preferably four turning rollers are provided to combine optimum efficiency for the articles to be rolled with mechanical simplicity.

The invention will be further elucidated referring to two preferred embodiments of the invention shown in the drawing, wherein:
Fig. 1 shows in side elevation schematically a first embodiment of the invention;
Fig. 2 shows the functioning of the turning mechanism according to fig. 1 in more detail; and
Fig. 3a-f show the several steps for rolling of a planar piece of material.

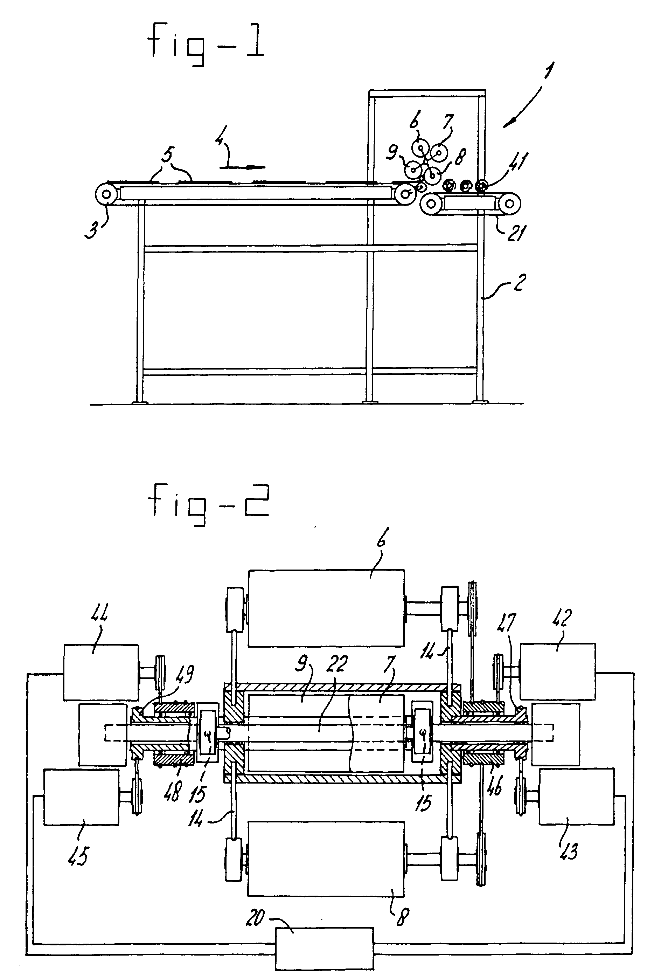

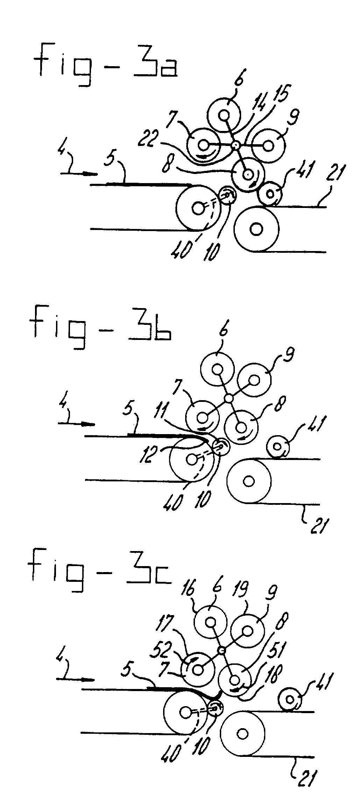

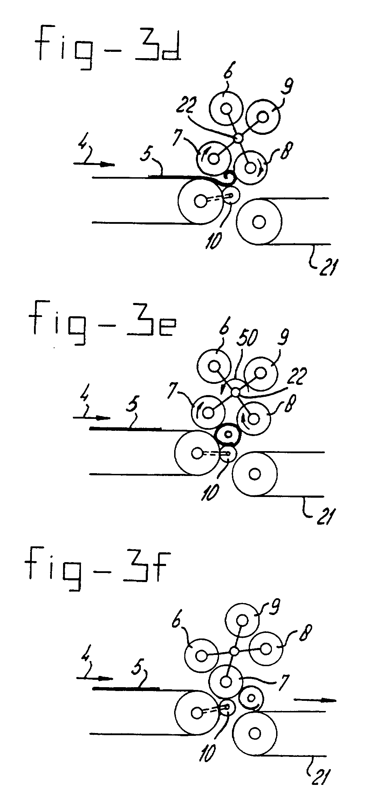

In fig. 1 the device for rolling of planar pieces of material 5 is generally referred by 1. It comprises a frame 2 on which feeding means or a belt conveyor 3 is provided moving in substantially horizontal direction of arrow 4 in a way not shown, on the direction of arrow 4 in a way not shown, on which planar pieces of material 5, such as flat pieces of dough, are positioned. At the discharge end of conveyor 3 a set of turning rollers 6-9 is provided (see also figures 2 and 3). Each roller is connected to an arm 14,15 respectively. The centre of the arms 14,15 can rotate around point 22. At the discharge end of belt 3 also a lifting roller 10 is provided. In Fig. 3 the direction of rotation of the different rollers and their further movement is elucidated. Lifting roller 10 is suspended to an arm 40 which can be moved in an upward and downward direction. 21 is a discharge conveyor.

From fig. 1 it is clear that rolled parts without filling, indicated with 41, are produced with the device according to fig. 1.

In fig. 2 the mechanism of the set of rollers and arms is shown in more detail. In fig. 2 only two rollers 6 and 8 are shown placed on arm 14. Only roller 9 of the other set 7,9 is shown. Four servo motors 42-45 are provided. The servo motors 42-45 are connected to frame 2 in a manner not further shown. Control of the servo motors is effected through control means 20. Servo motor 42 is operatively connected to pulley 46 which is connected on the other hand with a pulley provided on rollers 6 and 8 to rotate roller 6 and 8. Servo motor 43 is connected to pulley 47 being on the other hand connected to arm 14 of rollers 6 and 8.

The same applies to servo motor 44 being able to rotate rollers 7 and 9 through pulley 48 and servo motor 45 which can move arm 15 through pulley 49.

Through control of the several servo motors it is possible to adjust both the speed of rollers 6-9 and their relative position.

Two extra servo motors not shown in the figures and controlled by the same control means 20 are installed to drive the lifting roller and choose its position.

This is shown in more detail in fig. 3.

In fig. 3a the discharge position of an article and the receiving position for the next article comprising a planar piece of material is shown. The spacing between rollers 7 and 8 is relatively large. Lifting roller 10 is in its elevated position. When the flat piece 5 of material is feeded approaching the discharge end of conveyor 3 it will move somewhat in downward direction because of gravity and its adherence to the belt. This is shown in fig. 3b. Because of lifting conveyor roller 10 rotating in the direction of arrow 11 a first portion or tip 12 of flat piece 5 is lifted as shown in fig. 3c. Subsequently this first portion contacts the surface 18 of roller 8 rotating in the direction of arrow 51. This makes the flat piece to start a rolling movement as is shown in fig. 3d in which it is also shown that first portion 12 engages the next roller 7 which rotates in the same direction as roller 8 as shown with arrow 52 with its surface 17. Comparing fig. 3b-3d with fig. 3a shows that the rollers 8 and 7 have been moved towards each other through control 20. During rolling the article to be rolled is enclosed between rollers 7,8 and 10. The volume of the article which is rolled increases and to compensate therefor the rollers 8 and 7 are moved from each other whilst lifting roller 10 makes a downward movement (fig 3e). After finishing of the article lifting roller 10 is further moved downward and the assembly of rollers 6 and 7 makes a rotating movement as is shown in fig. 3e with arrows 50 around axis 22 to discharge the finished article as is shown in fig. 3f.

After that it is possible that the rollers return to the starting position of fig. 3a by return movement. However, preferably the rollers do rotate further in the same direction. In this way when an embodiment with four rollers is used which is shown in fig. 1 a continuous movement of rollers controlling of the article can be obtained.

If lifting is not easy the belt may be replaced by strings. The rollers can then be replaced by a roller with discs. The discs can be lowered below the surface of the strings.

Control of the movement of the arms of the rollers as well as the speed of the rollers themselves can be realized by a programmable logic controller with movement profiles for each servomotor. The movements are initiated by a sensor monitoring the infeed of a flat piece of material. For different product dimensions the appropriate movement profiles can be downloaded in the PLC from a memory.

By using a larger number of rollers, preferably an even number, vibrations because of imbalance are prevented without any structural measures.

Although the invention has been described above referring to a preferred embodiment of the invention it has to be understand that amendments can be made without leaving the scope protection of the appended claims. For example it is possible to realize the flat piece engaging surfaces 16-19 with another shape than the circular rollers, such as belts.

It is also possible to effect the control of the several movements by simply coupling of the rotation of the rollers with rotation of the arms an to use a much simplified system for control of rotation of the arms.

## Claims

1. Method for rolling of a planar piece of material, comprising feeding of said material to a first turning means (10); having a material engaging surface, directing said material to a second turning means (8) of which the engaging surface forces the flat pieces of material to form a curl and directing it to a third turning means (7)having a material engaging surface to further curl the flat piece of material, wherein the engagement surface of said first turning means is moved with regard to the engagement surface of the other of said turning means during rolling to increase the distance between said engagement surfaces, wherein during rolling the second turning means is moved on a direction having a main component corresponding substantially with the feeding direction of said material, characterised in that, during rolling the third turning means is moved in a direction having a main component corresponding substantially with the feeding direction of said material.

2. Method according to claim 1, wherein the feeding direction is ± 45° with regard to the horizontal axis.

3. Method according to one of the preceding claims, wherein at least two of said turning means comprise rollers of which the axes of rotation move with regard to each other during rolling.

4. Method according to claim 4, wherein the axes of rotation of the rollers describe a circle.

5. Method according to one of the preceding claims wherein the free end of the planar piece of material is lifted before contact with the engaging surface of the first turning means.

6. Method according to one of the preceding claims wherein rolling is realised such that the rolled piece of material comprises an internal opening.

7. Method according to one of the preceding claims wherein the speed of the material engaging surfaces of the subsequent turning means increases.

8. Method according to one of the preceding claims, wherein the turning means are moved at the end of the rolling action to discharge the rolled product, wherein the movement of the turning means during discharge results in a position of said turning means which corresponds to the starting position.

9. Device for rolling a planar piece of material (5) comprising, first turning means (10) having at least a movable, said piece of material engaging surface second turning means (6;8) having at least a movable, said piece of material engaging surface, and third turning means (7, 9) having at least a movable, said piece of material engaging surface, wherein said second and third piece of material engaging surfaces are movable with regard to said first turning means to enclose there between a space for receiving a rolled piece of material, wherein said second turning means is movable in a second direction substantially perpendicular to said first direction, characterised in that, said second and third turning means are arranged movable with regard to each other, in that control means (20) are provided adjusting the relative position of said first and second turning means during rolling with regard to each other.

10. Device according to claim 9, wherein said third turning means is connected to said second turning means.

11. Device according to one of the claims 9-11, wherein at least one of the turning means comprises a conveyor belt.

12. Device according to one of the claims 9-12, wherein the turning rollers are provided on arms (14, 15, 34, 35) which are movable with regard to each other.

13. Device according to claim 12, wherein said arms are pivotally connected to each other and arranged to realise a rotating movement around the pivot point (22).

14. Device according to claim 12 or 13, wherein four turning rollers (6) are provided balanced relative to the pivot point (22).

15. Device according to one of the claims 9-12, wherein the first turning means comprise lifting means (10).

16. Device according to claim 15, wherein the lifting means comprise a roller of which the position with regard to the feeding face of the feeding means is adjustable during rolling.

## Patentansprüche

1. Verfahren zum Aufrollen eines planen Materialstücks, das die Zuführung des genannten Materials zu einem ersten Drehmittel (10) mit einer Materialangriffsfläche, die Lenkung des genannten Materials zu einem zweiten Drehmittel (8), dessen Angriffsfläche die flachen Materialstücke veranläßt, sich aufzurollen, und die Lenkung desselben zu einem dritten Drehmittel (7) mit einer Materialangriffsfläche zum weiteren Aufrollen des flachen Materialstücks umfaßt, wobei die Angriffsfläche des genannten ersten Drehmittels im Verhältnis zu der Angriffsfläche des anderen der genannten Drehmittel beim Aufrollen so bewegt wird, daß der Abstand zwischen den genannten Angriffsflächen zunimmt, wobei das zweite Drehmittel während des Aufrollens in einer Richtung mit einer Hauptkomponente bewegt wird, die im wesentlichen der Zuführrichtung des genannten Materials entspricht, dadurch gekennzeichnet, daß das dritte Drehmittel während des Aufrollens in einer Richtung mit einer Hauptkomponente bewegt wird, die im wesentlichen der Zuführrichtung des genannten Materials entspricht.

2. Verfahren nach Anspruch 1, dadurch gekennzeichnet, daß die Zuführrichtung einen Winkel von ± 45° zur horizontalen Achse bildet.

3. Verfahren nach einem der vorstehenden Ansprüche, dadurch gekennzeichnet, daß wenigstens zwei der genannten Drehmittel Rollen aufweisen, deren Drehachsen sich während des Aufrollens im Verhältnis zueinander bewegen.

4. Verfahren nach Anspruch 4, dadurch gekennzeichnet, daß die Drehachsen der Rollen einen Kreis beschreiben.

5. Verfahren nach einem der vorstehenden Ansprüche, dadurch gekennzeichnet, daß das freie Ende des planen Materialstücks vor Berührung der Angriffsfläche des ersten Drehmittels angehoben wird.

6. Verfahren nach einem der vorstehenden Ansprüche, dadurch gekennzeichnet, daß das Aufrollen so vor sich geht, daß das aufgerollte Materialstück eine innere Öffnung enthält.

7. Verfahren nach einem der vorstehenden Ansprüche, dadurch gekennzeichnet, daß die Geschwindigkeit der Materialangriffsflächen der nachfolgenden Drehmittel zunimmt.

8. Verfahren nach einem der vorstehenden Ansprüche, dadurch gekennzeichnet, daß die Drehmittel am Ende des Aufrollvorgangs so bewegt werden, daß das aufgerollte Produkt abgeführt wird, wobei die Bewegung der Drehmittel während der Abführung zu einer Position der genannten Drehmittel führt, die der Ausgangsposition entspricht.

9. Vorrichtung zum Aufrollen eines planen Materialstücks (5), die erste Drehmittel (10) mit wenigstens einer beweglichen, an dem genannten Materialstück angreifenden Oberfläche, zweite Drehmittel (6, 8) mit wenigstens einer beweglichen, an dem genannten Materialstück angreifenden Oberfläche und dritte Drehmittel (7, 9) mit wenigstens einer beweglichen, an dem genannten Materialstück angreifenden Oberfläche umfaßt, wobei die genannten zweiten und dritten, an dem Materialstück angreifenden Oberflächen im Verhältnis zu dem genannten ersten Drehmittel so beweglich sind, daß dazwischen ein Raum für die Aufnahme eines aufgerollten Materialstücks verbleibt, wobei das genannte zweite Drehmittel in einer zweiten, zur genannten ersten Richtung im wesentlichen lotrechten Richtung beweglich ist, dadurch gekennzeichnet, daß das genannte zweite und dritte Drehmittel im Verhältnis zueinander beweglich angeordnet sind, daß Steuermittel (20) vorgesehen sind, die die relative Position des genannten ersten und des zweiten Drehmittels beim Aufrollen im Verhältnis zueinander bestimmen.

10. Vorrichtung nach Anspruch 9, dadurch gekennzeichnet, daß das genannte dritte Drehmittel mit dem genannten zweiten Drehmittel verbunden ist.

11. Vorrichtung nach einem der Ansprüche 9-11, dadurch gekennzeichnet, daß wenigstens eines der Drehmittel ein Förderband enthält.

12. Vorrichtung nach einem der Ansprüche 9-12, dadurch gekennzeichnet, daß die Drehrollen an Armen (14, 15, 34, 35) angebracht sind, die im Verhältnis zueinander beweglich sind.

13. Vorrichtung nach Anspruch 12, dadurch gekennzeichnet, daß die genannten Arme gelenkig miteinander verbunden und so angeordnet sind, daß eine Drehbewegung um den Drehpunkt (22) zustande kommt.

14. Vorrichtung nach Anspruch 12 oder 13, dadurch gekennzeichnet, daß vier Drehrollen (6) in einem Gleichgewichtsverhältnis zum Drehpunkt (22) vorgesehen sind.

15. Vorrichtung nach einem der Ansprüche 9-12, dadurch gekennzeichnet, daß das erste Drehmittel Hubmittel (10) enthält.

16. Vorrichtung nach Anspruch 15, dadurch gekennzeichnet, daß die Hubmittel eine Rolle enthalten, deren Position im Verhältnis zur Zuführfläche des Zuführmittels beim Aufrollen verstellbar ist.

## Revendications

1. Procédé d'enroulement d'une pièce plane de matériau, comprenant le chargement dudit matériau vers un premier moyen tournant (10) ; présentant une surface d'engagement du matériau, orientant ledit matériau vers un deuxième moyen tournant (8) dont la surface d'engagement force les pièces plates de matériau à former un enroulement et orientant celles-ci vers un troisième moyen tournant (7) présentant une surface d'engagement du matériau pour enrouler davantage ladite pièce plate de matériau, dans lequel la surface d'engagement dudit premier moyen tournant se déplace par rapport à la surface d'engagement de l'autre moyen tournant au cours de l'enroulement afin d'augmenter la distance entre lesdites surfaces d'engagement, dans lequel, au cours de l'enroulement, le deuxième moyen tournant se déplace dans une direction présentant une composante principale correspondant sensiblement à la direction de chargement dudit matériau, caractérisé en ce que, au cours de l'enroulement, ledit troisième moyen tournant se déplace dans une direction présentant une composante principale correspondant sensiblement à la direction de chargement dudit matériau.

2. Procédé selon la revendication 1, dans lequel la direction de chargement est de ± 45° par rapport à l'axe horizontal.

3. Procédé selon l'une quelconque des revendications précédentes, dans lequel au moins deux desdits moyens tournants comprennent des rouleaux dont les axes de rotation se déplacent l'un par rapport à l'autre au cours de l'enroulement.

4. Procédé selon la revendication 4, dans lequel les axes de rotation des rouleaux décrivent un cercle.

5. Procédé selon l'une quelconque des revendications précédentes, dans lequel l'extrémité libre de la pièce plane du matériau est relevée avant d'entrer en contact avec la surface d'engagement du premier moyen tournant.

6. Procédé selon l'une quelconque des revendications précédentes, dans lequel l'enroulement est réalisé de telle sorte que la pièce de matériau roulée comprend une ouverture interne.

7. Procédé selon l'une quelconque des revendications précédentes, dans lequel la vitesse des surfaces d'engagement du matériau du moyen tournant subséquent augmente.

8. Procédé selon l'une quelconque des revendications précédentes, dans lequel les moyens tournants se déplacent à la fin de l'opération d'enroulement pour décharger le produit enroulé, dans lequel le déplacement des moyens tournants au cours du déchargement résulte de ce que lesdits moyens tournants prennent une position correspondant à la position de départ.

9. Dispositif pour enrouler une pièce plane de matériau (5) comprenant un premier moyen tournant (10) présentant au moins une surface mobile d'engagement de ladite pièce de matériau, un deuxième moyen tournant (6, 8) présentant au moins une surface mobile d'engagement de ladite pièce de matériau, et un troisième moyen tournant (7, 9) présentant au moins une surface mobile d'engagement de ladite pièce de matériau, dans lequel lesdites deuxième et troisième surfaces d'engagement des pièces de matériau se déplacent par rapport audit premier moyen tournant pour former entre eux un espace destiné à recevoir une pièce de matériau enroulée, dans lequel ledit deuxième moyen tournant se déplace dans une deuxième direction sensiblement perpendiculaire à ladite première direction, caractérisé en ce que lesdits deuxième et troisième moyens tournants sont agencés pour se déplacer l'un par rapport à l'autre, et en ce que des moyens de commande (20) sont fournis pour régler la position relative desdits premier et deuxième moyens tournants, l'un par rapport à l'autre, au cours de l'enroulement.

10. Dispositif selon la revendication 9, dans lequel ledit troisième moyen tournant est raccordé audit deuxième moyen tournant.

11. Dispositif selon l'une des revendications 9 à 11, dans lequel au moins l'un des moyens tournants comprend une bande transporteuse.

12. Dispositif selon l'une des revendications 9 à 12, dans lequel les rouleaux tournants sont fournis sur des bras (14, 15, 34, 35) mobiles les uns par rapport aux autres.

13. Dispositif selon la revendication 12, dans lequel lesdits bras sont raccordés, pour pivoter, les uns aux autres et agencés pour réaliser un mouvement de rotation autour du point de pivotement (22).

14. Dispositif selon la revendication 12 ou 13, dans lequel quatre rouleaux tournants (6) sont fournis de manière équilibrée par rapport au point de pivotement (22).

15. Dispositif selon l'une des revendications 9 à 12, dans lequel le premier moyen tournant comprend des moyens de relevage (10).

16. Dispositif selon la revendication 15, dans lequel les moyens de relevage comprennent un rouleau dont la position par rapport à la face de chargement des moyens de chargement peut être réglée au cours de l'enroulement.
